# EUROPEAN PATENT SPECIFICATION

(11) **EP 3 006 112 B1**
(45) Date of publication and mention of the grant of the patent: **26.04.2017**
(21) Application number: 15188405.3
(22) Date of filing: 05.10.2015
(51) Int. Cl.: B03B 9/00

(54) **PROCESS AND APPARATUS FOR REFINING SAND**
VERFAHREN UND VORRICHTUNG ZUR AUFBEREITUNG VON SAND
PROCÉDÉ ET APPAREIL POUR LE RAFFINAGE DU SABLE

(30) Priority: 08.10.2014 GB 201417830
(43) Date of publication of application: 13.04.2016
(73) Proprietor: CDE Global Limited, County Tyrone BT80 9DG (GB)
(72) Inventor: Sloan, Glenn, Castlerock, County Londonderry BT51 4SW (GB); Convery, Anthony, Moneymore, County Londonderry BT45 7NG (GB)
(74) Representative: Waller, Stephen

(56) References cited:
- WO-A1-2010/088090
- WO-A1-2014/106302
- US-A1- 2004 026 342

## Description

### FIELD OF THE INVENTION

This invention relates to a process and apparatus for refining sand and in particular to a process and apparatus for refining frac sand.

### BACKGROUND OF THE INVENTION

"Frac sand" is a high-purity silica sand with very durable and very round grains. It is a crush-resistant material produced for use by the petroleum industry. It is used in the hydraulic fracturing process (known as "fracking") to produce petroleum fluids, such as oil, natural gas and natural gas liquids from rock units that lack adequate pore space for these fluids to flow to a well.

Some subsurface rock formations, such as organic shale, contain large amounts of oil, natural gas or natural gas liquids that will not flow freely to a well. They will not flow to a well because the rock unit either lacks permeability (interconnected pore spaces) or the pore spaces in the rock are so small that these fluids can not flow through them.

The hydraulic fracturing process solves this problem by generating fractures in the rock. This is done by drilling a well into the rock, sealing the portion of the well in the petroleum-bearing zone, and pumping water under high pressure into that portion of the well. This water is generally treated with a chemicals and thickeners such as guar gum to create a viscous gel. This gel facilitates the water's ability to carry grains of frac sand in suspension.

Large pumps at the surface increase the water pressure in the sealed portion of the well until it is high enough to exceed the breaking point of the surrounding rocks. When their breaking point is reached, the rocks fracture suddenly and water rushes rapidly into the fractures, inflating them and extending them deeper into the rock. Billions of sand grains are carried deep into the fractures by this sudden rush of water. A few thousand tons of frac sand may be required to stimulate a single well.

When the pumps are turned off, the fractures deflate but cannot close completely because they are propped open by the frac sand. This only occurs if enough sand grains to resist the force of the closing fractures have been delivered into the rock.

The new fractures in the rock, propped open by the durable sand grains, form a network of pore space that allows petroleum fluids to flow out of the rock and into the well. Frac sand is known as a "proppant" because it props the fractures open.

Frac sand must meet very demanding specifications. Frac sand must usually comprise high-purity silica sand with a specific grain size perfectly matched to job requirements, with a spherical shape that enables it to be carried in hydraulic fracturing fluid with minimal turbulence, along with a durability to resist crushing forces of closing fractures. Frac sand is produced in a range of sizes from as small as 0.1 mm in diameter to over 2mm in diameter depending upon customer specifications. Most of the frac sand used is between 0.4 and 0.8 mm in size.

Frac sand specifications are the responsibility in the USA of the American Petroleum Institute (API) and the current standard is API RP 56. These specifications are very demanding and, as a result, suitable deposits are limited. The limited availability of natural reserves which are suitable for frac sand production coupled with growing demand ensures a high price for any producers able to meet the API RP 56 frac sand specifications.

Frac sand is not used straight from the ground. It requires processing or refining to optimize its performance. After mining, the sand is cleaned in washing plant to remove clay, silt and other fine contaminants. After washing, the sand is typically stacked in piles to allow the wash water to drain off. This operation is usually done outdoors and is restricted to times of the year when temperatures are above freezing. After the sand is drained, it is typically placed in an air dryer to remove all moisture. The dry grains are then screened to obtain specific size fractions for different customers. Sand that is not suitable for fracking may be separated and sold for other uses.

Some sand refining plants are located at the mine site. However, known sand refining plants are very expensive and time consuming to build and are usually very large. Therefore they are therefore often shared by multiple mines. These plants are therefore often centrally located to several mines and the sand is delivered to the plant by truck, train or conveyer.

The prior art documents WO 2014/106302 A1 and WO 2010/088090 A1 disclose methods and apparatus for refining fracking sand with fines separation, dewatering and attrition scrubbing.

An object of the present invention is to provide a cost effective portable frac sand refining process and apparatus that can be readily installed at the mine/quarry site and which can be containerised for transportation to site.

### SUMMARY OF THE INVENTION

According to a first aspect of the present invention there is provided A process for refining sand for use as frac sand comprising the steps of passing the sand through a first fines separation stage to remove fine particles of contaminant from the sand, reducing the water content of the sand to less than 20%, passing the sand into an attrition scrubber unit containing moving blades to delaminate clay and other contaminants from the sand grains, passing the sand from the attrition scrubber unit through a second fines separation stage to separate fine contaminants from the sand and dewatering the resulting sand product in a further dewatering stage.

Said first and/or said second fines separating stages may be carried out in a respective hydro-cyclone unit. The or each hydro-cyclone unit may comprise multiple cyclones arranged in parallel to one another.

Preferably the water content of the sand downstream of the first fines separation stage is reduced by means of a first dewatering screen. Said further dewatering stage may be carried out on a second dewatering screen.

The process may comprise a first step of grading the sand to remove oversize material from the sand on a vibratory screen having an apertured deck upstream of said first fines separation stage. The step of grading the sand may remove material having a particle size of greater than 2mm.

In one embodiment the process may comprise the further comprising the step of controlling the water content of the sand upstream of the attrition scrubber unit such that the sand entering the attrition scrubber unit has a water content of between 20% and 25%. The water content of the sand may be controlled by determining the water content of the sand and adding water to the sand to achieve the required water content. The water content of the sand may be determined by monitoring the torque demand of the attrition scrubber unit.

The sand may pass into a counter flow classification unit upstream of the second fines separation stage, wherein an upwards flow of water separates particles smaller than 200µm from the sand, the sand product settling in the bottom of the counter flow classification unit, the sand being removed from the bottom of the counter flow classification unit before being passed into said further dewatering stage.

According to a further aspect of the present invention there is provided an apparatus for refining sand for use as frac sand comprising an elongate chassis, a first fines separating device being mounted on the chassis for separating fine material from the sand, a first dewatering screen being mounted on the chassis adjacent to and downstream of the first fines separating device for receiving sand therefrom, an attrition scrubber unit being mounted on the chassis adjacent to and downstream of the first dewatering screen, said attrition scrubber unit receiving sand from the first dewatering screen, said attrition scrubber unit containing a plurality of moving blades adapted to delaminate clay and other contaminants from the sand grains as the sand passes through the attrition scrubber unit, a second fines separating device, a second dewatering screen being provided on a second end of the chassis, opposite said first end, for receiving the sand product from the second fines separating device to dewater the sand product.

Preferably the first fines separating device comprises a first hydro-cyclone unit.

Preferably the second fines separating device comprises a second hydro-cyclone unit.

The first and/or the second hydro-cyclone units may comprise multiple cyclones having a common inlet manifold, and common outlet manifolds.

The second fines separating device may further comprise a classifier unit being mounted on the chassis for receiving sand from the second hydro-cyclone unit for further separating fine contaminants from the sand

Preferably the classifier unit is mounted on the chassis beneath the second hydro-cyclone unit. The classifier unit may comprise a counter flow classification unit comprising at least one tank into which the sand is introduced downstream of the second hydro-cyclone unit, an upward flow of water being passed into a lower region of the at least one tank at a predetermined velocity to lift fine particles up into an overflow weir of the tank, the sand product settling and being collected in a lower region of the tank. In a preferred embodiment the classifier unit comprises two or more counter flow classification units mounted side by side on the chassis.

The apparatus may further comprise a grading screen mounted on a first end of the chassis for removing oversize material from the sand upstream of said first fines separating device. A pump may be provided for pumping sand, entrained in a flow of water, from a sump of the grading screen into the first fines separating device.

A control device may be provided for controlling the water content of the sand upstream of the attrition scrubber unit such that the sand entering the attrition scrubber unit has a water content of between 20% and 25%. The control device may determine the water content of the sand downstream of the first dewatering screen and adds water to the sand to achieve the required water content. The control device may determine the water content of the sand by monitoring the torque applied the attrition scrubber unit.

The chassis may be separable into two or more elongate sections to allow the apparatus to be containerised for transportation to the site.

The components of the various stages of the apparatus may be mounted on and may be spread along the length of the chassis, minimising the distance the sand has to be moved between each stage.

Preferably the various components of the apparatus are located at substantially the same height along the length of the chassis.

### BRIEF DESCRIPTION OF THE DRAWINGS

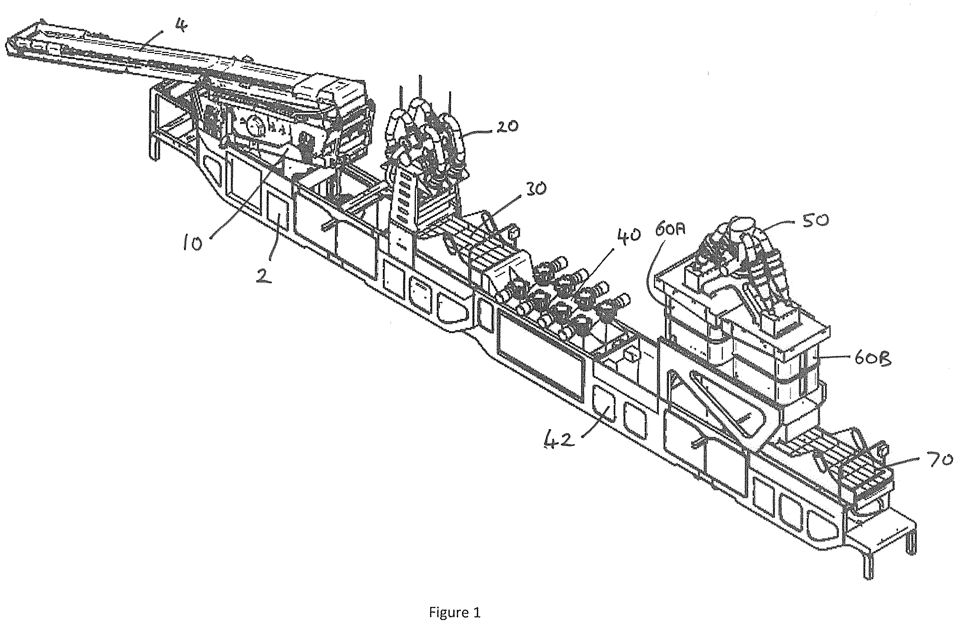

A frac sand refining apparatus and method will now be described, by way of example only, with reference to the accompanying drawings, in which :-
Figure 1 is a perspective view of an apparatus for refining frac sand in accordance with an embodiment of the present invention;

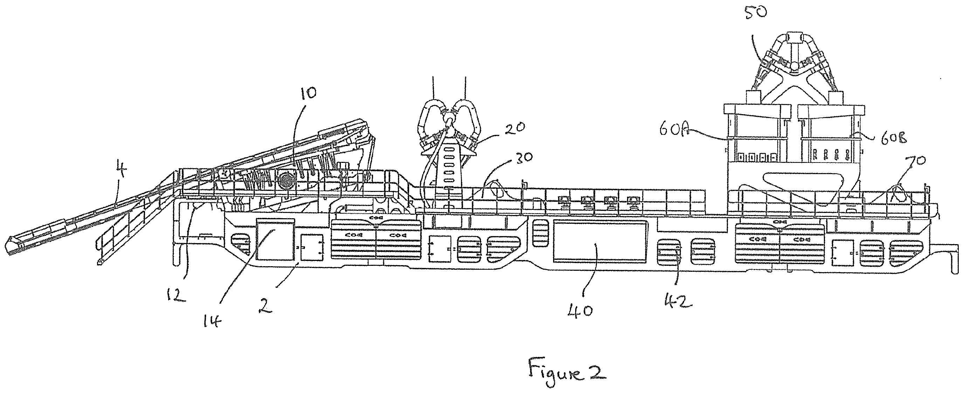

Figure 2 is a side view of the apparatus of Figure 1;

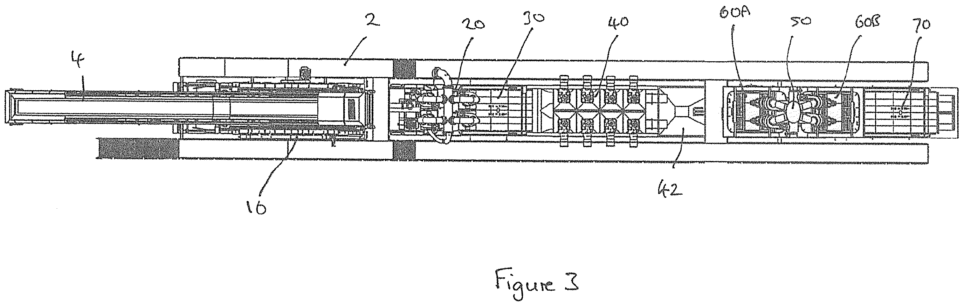

Figure 3 is a plan view of the apparatus of Figure 1;

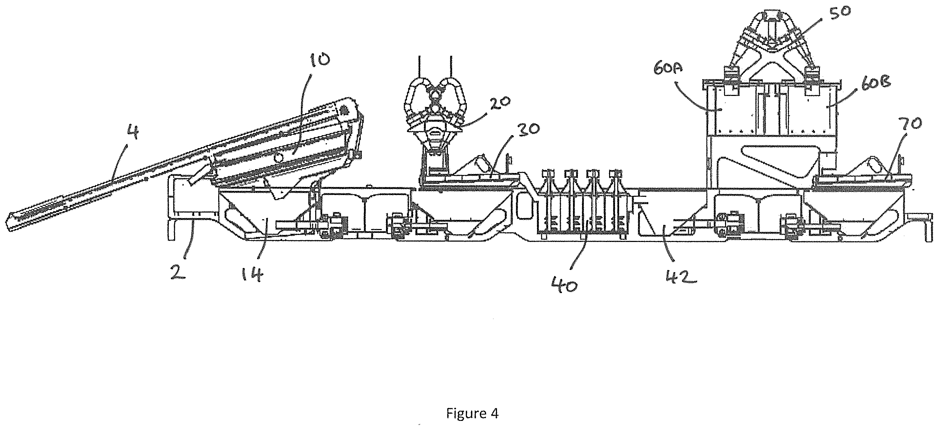

Figure 4 is a longitudinal sectional view through the apparatus of Figure 1;
Figure 5 is a detailed plan view of the attrition cell cluster of the apparatus of Figure 1; and
Figure 6 is a longitudinal sectional view through one bank of cells of the attrition cell cluster of Figure 5.

### DETAILED DESCRIPTION OF THE DRAWINGS

As illustrated in the drawings, a frac sand refining apparatus in accordance with an embodiment of the present invention comprising an elongate chassis 2 upon which the various stages of the refining apparatus are mounted. The chassis 2 may be separable into two or more sections to allow the apparatus to be containerised for transportation to the site. The components of the various stages of the apparatus are mounted on and are spread along the length of the chassis 2, minimising the distance the sand has to be moved between each stage. Furthermore, the various stages of the apparatus are located at substantially the same height along the length of the chassis 2, reducing pumping loads compared to prior art plants, where sand and water typically have to be pumped to considerable height as they are transferred between different stages of the refining operation.

In a first stage, material is loaded onto a lower end of an upwardly inclined feed conveyor 4 provided at a first end of the chassis 2, comprising a belt conveyor, and is delivered onto an inclined vibrating grading screen 10 located on the first end of the chassis 2 beneath the feed conveyor 4. The feed material is screened by the grading screen 10 into an oversize (waste product), passing off a lower end of the grading screen 10 to be delivered into a hopper or skip or onto a belt conveyor located beneath the feed conveyor 4 at the first end of the chassis 2. The undersize material (i.e. the sand product) passes through apertures in the deck of the grading screen 10 to be collected beneath the deck of the screen in a sump. Typically the cut point of this first stage may be approximately 2mm (i.e. the screen deck having 2mm apertures) to enable 250 tons per hour of material to pass through the 2mm apertures of the screen deck, whereby the oversize material having a particle size greater than 2mm is removed from the sand product. It is envisaged that decks having a smaller aperture size may be used where a smaller grain size if required. In one embodiment the screen deck may be 1.8 metres wide and 8 metres in length.

In a second stage, the product from the grading screen 10 is pumped from the sump of the grading screen 10, preferably using a centrifugal slurry pump and rubber lined pipework, to a first set of hydro-cyclones 20. The first set of hydro-cyclones 20 perform a separation process, typically removing very fine particles of sand and contaminants (e.g. clay & organics), as well as dewatering the product. The cut point of the second stage may be in the region of 63-75µm. The hydro-cyclones 20 will also increase the concentration (i.e. reduce the water content) of the product by removing water as well as contaminants to facilitate the next stage of the process. Typical the underflow of the first set of the hydro-cyclones 20 is in the region of 1000 g/l. As shown in the drawings, the first set of hydro-cyclones 20 may comprise four cyclone arranged in adjacent pairs, fed from a common manifold and delivering an underflow and overflow to respective common outlet manifolds.

The third stage of the process is a dewatering stage, wherein the product from the first set of hydro-cyclones 20 is delivered onto a first vibratory dewatering screen 30 mounted on the frame 2 adjacent the first set of hydro-cyclones 20. The first set of hydro-cyclones 20 are mounted above a feed end of the first dewatering screen 30 such that the underflow of the hydro-cyclones 20 may be delivered onto the dewatering screen 30 by gravity.

A linear reciprocating force is applied to the first dewatering screen 30, via a pair of counter rotating eccentric masses as is known in the art, at a desired stroke and at a set frequency. This reciprocating motion of the screen 30 effectively shakes the excess water from the product, through small holes in the deck of the screen, reducing the moisture content of the product down to about 15%.

In a fourth stage, the product (sand) from the first dewatering screen 30 is then discharged from a discharge end of the screen and is subsequently gravity fed (or alternatively pumped) into an attrition cell cluster 40 mounted on the frame 2 adjacent and downstream of the first dewatering screen 30. The attrition cell cluster 40 comprises a plurality of attrition scrubber cells (up to 8) arranged in series, each containing rotating blades which force sand grains against each other, resulting in intense scrubbing, polishing and disintegration of the sand, delaminating clay, graphite and other contaminants from the sand grains.

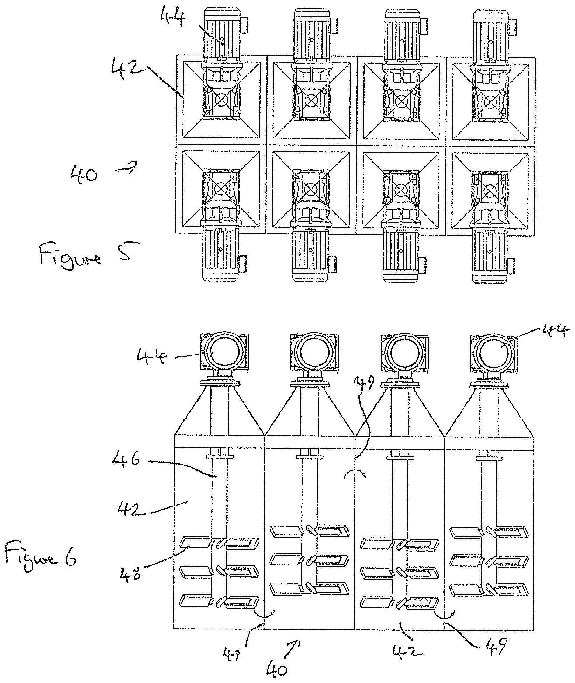

Figures 5 and 6 illustrate the attrition cell cluster 40 in more detail. As can be seen from Figure 5, the attrition cell cluster comprises 8 cells 42 arranged in two banks of four, each cell 42 having a drive motor 44 mounted at an upper end and containing a vertically extending drive shaft 46 having a plurality of blades or vanes 48 mounted thereon. The drive motors 44 rotate the drive shafts 46 and thus move the blades 48 through the sand slurry contained within each cell 42. Openings 49 are provided between the cells 42 in each bank at alternating between upper and lower ends of the adjacent cells so that sand must pass through all of the cells 42 of each bank of cells in series, preferably passing vertically though each cell between the openings 49.

The water content of the product entering the attrition cell cluster 40 is carefully controlled to obtain a water content of 20% to 25% (adding water to the product to achieve the desired water content) to ensure optimum operation of the attrition cell cluster. This may be achieved by monitoring the torque load applied to the blades 48 by the drive motor 44 of the upstream most cell 42 of the attrition cell cluster 40 and adding water as necessary to achieve the optimum water content, resulting in maximum attrition of the sand. The attrition cell cluster 40 will remove all surface contamination off the sand grains. The water content may be controlled by means of a PLC (programmable logic controller), monitoring the torque of the motor 44 and controlling a motorised or pneumatically operated valve to add water into the cell 42 as required.

The product discharged from the attrition cell cluster 40 is fed into a sump or tank 42 mounted in the frame adjacent and downstream of the attrition cell cluster 40 . Fresh water is added to the sand in the sump 42 to achieve the correct concentration for a subsequent pumping process (typically 350g/l). A centrifugal slurry pump may be then used to feed the product into a second set of hydro-cyclones 50.

The second set of hydro-cyclones 50 perform another separation process in a fifth stage of the refining process, removing the very fine material (clay and other contaminants) separated from the sand grains in the attrition process. As shown in the drawings, the second set of hydro-cyclones 50 may also comprise an arrangement of four cyclones arranged in pairs, fed from a common manifold and delivering material to common outlet manifolds above and below the cyclones.

In a sixth stage, the underflow of the second set of hydro-cyclones 50 is fed into two (or more) counter flow classification units (CFCUs) 60A,60B upon which the second set of hydro-cyclones 50 are mounted. As shown in the drawings, each pair of hydro-cyclones 50 of the second set of hydro-cyclones 50 may feed a separate CFCU, the CFCUs 60A,60B being mounted side by side on the chassis 2 to maximise classification of the product without increasing the width of the apparatus. The CFCUs 60A,60B may separate particles smaller than 100um or 200um from the product, the cut point possibly varying from customer to customer to suit customer requirements.

In each CFCU 60A,60B the product is passed into a tank, wherein an upward flow of water is pumped into a lower region of the tank at a predetermined velocity (typically 8-10mm/s) to lift finer particles up into an overflow weir of the tank. Larger particles will want to settle in the tank, sinking to the bottom of the tank.

Using pressure transducers, the 'teeter bed' inside the tank of each CFCU can be determined, then, using this signal, a PLC can control the operation of an outlet valve, such as a modulating outlet pinch valve, at the bottom of each tank to maintain the level of this teeter bed. Using these controls a consistent level of separation can be performed. The overflow from each CFCU tank, comprising water contaminated with clay and other fine materials separated from the sand product, may be piped to a further process, such as a further cyclone separator and or dewatering screen, to allow the water to be recycled.

The underflow (product) of the tank of each CFCU is transferred to a seventh stage, comprising a further dewatering screen 70, removing excess water from the sand product, which may then be discharged onto a stockpile conveyor.

The invention is not limited to the embodiment(s) described herein but can be amended or modified without departing from the scope of the present invention.

## Claims

1. A process for refining sand for use as frac sand comprising the steps of passing the sand through a first fines separation stage (20) to remove fine particles of contaminant from the sand, reducing the water content of the sand to less than 20%, passing the sand into an attrition scrubber unit (40) containing moving blades (48) to delaminate clay and other contaminants from the sand grains, passing the sand from the attrition scrubber unit through a second fines separation stage (50) to separate fine contaminants from the sand and dewatering the resulting sand product in a further dewatering stage.

2. A process as claimed in any preceding claim, further comprising the step of controlling the water content of the sand upstream of the attrition scrubber unit (40) such that the sand entering the attrition scrubber unit (40) has a water content of between 20% and 25%.

3. A process as claimed in claim 2, wherein the water content of the sand is controlled by determining the water content of the sand and adding water to the sand to achieve the required water content.

4. A process as claimed in claim 3, wherein the water content of the sand is determined by monitoring the torque demand of the attrition scrubber unit (40).

5. A process as claimed in any preceding claim, wherein the sand is passes into a counter flow classification unit (60A,60B) upstream of the second fines separation stage (50), wherein an upwards flow of water separates particles smaller than 200µm from the sand, the sand product settling in the bottom of the counter flow classification unit (60A,60B), the sand being removed from the bottom of the counter flow classification unit before being passed into said further dewatering stage (70).

6. A process as claimed in any preceding claim, comprising a first step of grading the sand to remove oversize material from the sand on a vibratory screen (10) having an apertured deck upstream of said first fines separation stage, wherein the step of grading the sand removes material having a particle size of greater than 2mm.

7. An apparatus for refining sand for use as frac sand comprising an elongate chassis (2), a first fines separating device (20) being mounted on the chassis for separating fine material from the sand, a first dewatering screen (30) being mounted on the chassis adjacent to and downstream of the first fines separating device for receiving sand therefrom, an attrition scrubber unit (40) being mounted on the chassis adjacent to and downstream of the first dewatering screen, said attrition scrubber unit receiving sand from the first dewatering screen (30), said attrition scrubber unit (40) containing a plurality of moving blades (48) adapted to delaminate clay and other contaminants from the sand grains as the sand passes through the attrition scrubber unit (40), a second fines separating device (50), a second dewatering screen (70) being provided on a second end of the chassis (2), opposite said first end, for receiving the sand product from the second fines separating device (50) to dewater the sand product.

8. An apparatus as claimed in claim 7, wherein the first and second fines separating devices (20,50) comprises first and second hydro-cyclone units respectively.

9. An apparatus as claimed in claim 8, wherein the first and/or the second hydro-cyclone unit (20,50) comprises multiple cyclones having a common inlet manifold, and common outlet manifolds.

10. An apparatus as claimed in claim 8 or claim 9, wherein the second fines separating device further comprises a classifier unit (60A,60B) being mounted on the chassis (2) for receiving sand from the second hydro-cyclone unit (50) for further separating fine contaminants from the sand

11. An apparatus as claimed in claim 10, wherein the classifier unit (60A,60B) comprises a counter flow classification unit comprising at least one tank into which the sand is introduced downstream of the second hydro-cyclone unit, an upward flow of water being passed into a lower region of the at least one tank at a predetermined velocity to lift fine particles up into an overflow weir of the tank, the sand product settling and being collected in a lower region of the tank.

12. An apparatus as claimed in any of claims 7 to 11, further comprising a grading screen (10) mounted on a first end of the chassis (2) for removing oversize material from the sand upstream of said first fines separating device (20).

13. An apparatus as claimed in claim 12, wherein a pump is provided for pumping sand, entrained in a flow of water, from a sump of the grading screen (10) into the first fines separating device (20).

14. An apparatus as claimed in any of claims 7 to 13, wherein a control device is provided for controlling the water content of the sand upstream of the attrition scrubber unit (40) such that the sand entering the attrition scrubber unit has a water content of between 20% and 25%.

15. An apparatus as claimed in claim 14, wherein the control device determines the water content of the sand by monitoring the torque applied to the blades (48) of the attrition scrubber unit (40) and controls the water content of the sand by adding water to the sand to achieve the target water content.

## Patentansprüche

1. Verfahren zur Raffination von Sand zur Verwendung als Frac-Sand, wobei das Verfahren folgende Schritte umfasst: Durchleiten des Sandes durch eine erste Feinmaterialtrennstufe (20), um feine Partikel von Verunreinigungen aus dem Sand zu entfernen, Verringern des Wassergehalts des Sandes auf weniger als 20 %, Weiterleiten des Sandes in eine Abriebwäschereinheit (40), die Laufschaufeln (48) umfasst, um Ton und andere Verunreinigungen von den Sandkörnern zu delaminieren, Weiterleiten des Sandes von der Abriebwäschereinheit durch eine zweite Feinmaterialtrennstufe (50), um feine Verunreinigungen von dem Sand zu trennen, und Entwässern des resultierenden Sandprodukts in einer weiteren Entwässerungsstufe.

2. Verfahren nach einem der vorhergehenden Ansprüche, das ferner den Schritt des Steuerns des Wassergehalts des Sandes stromaufwärts der Abriebwäschereinheit (40) umfasst, so dass der Sand, der in die Abriebwäschereinheit (40) eintritt, einen Wassergehalt von zwischen 20 % und 25 % aufweist.

3. Verfahren nach Anspruch 2, wobei der Wassergehalt des Sandes durch Bestimmung des Wassergehalts des Sandes und Zugabe von Wasser zum Sand gesteuert wird, um den erforderlichen Wassergehalt zu erreichen.

4. Verfahren nach Anspruch 3, wobei der Wassergehalt des Sandes durch Überwachung des Drehmomentbedarfs der Abriebwäschereinheit (40) bestimmt wird.

5. Verfahren nach einem der vorhergehenden Ansprüche, wobei der Sand in eine Gegenstromklassifizierungseinheit (60A, 60B) stromaufwärts der zweiten Feinmaterialtrennstufe (50) geleitet wird, wobei Partikel, die kleiner als 200 µm sind, durch eine Aufwärtsströmung von Wasser von dem Sand getrennt werden, wobei sich das Sandprodukt am Boden der Gegenstromklassifizierungseinheit (60A, 60B) absetzt, wobei der Sand von dem Boden der Gegenstromklassifizierungseinheit entfernt wird, bevor er in die weitere Entwässerungsstufe (70) geleitet wird.

6. Verfahren nach einem der vorhergehenden Ansprüche, das einen ersten Schritt des Abstufens des Sandes umfasst, um übergroßes Material aus dem Sand auf einem Vibrationssieb (10) zu entfernen, der ein mit Öffnungen versehenes Deck stromaufwärts der ersten Feinmaterialtrennstufe aufweist, wobei durch den Schritt des Abstufens des Sandes Material mit einer Teilchengröße von größer als 2 mm entfernt wird.

7. Vorrichtung zur Raffination von Sand zur Verwendung als Frac-Sand, die Folgendes umfasst: ein langgestrecktes Chassis (2), eine erste Feinmaterialtrennvorrichtung (20), die an dem Chassis angebracht ist, um feines Material von dem Sand zu trennen, ein erstes Entwässerungssieb (30), das an dem Chassis benachbart zu und stromabwärts der ersten Feinmaterialtrennvorrichtung angebracht ist, um Sand davon zu empfangen, wobei an dem Chassis benachbart zu und stromabwärts dem ersten Entwässerungssieb eine Abriebwäschereinheit (40) angebracht ist, wobei die Abriebwäschereinheit Sand von dem ersten Entwässerungssieb (30) empfängt, wobei die Abriebwäschereinheit (40) eine Vielzahl von Laufschaufeln (48) umfasst, die dafür ausgelegt sind, Ton und andere Verunreinigungen aus den Sandkörnern zu delaminieren, wenn der Sand durch die Abriebwäschereinheit (40) hindurchtritt, eine zweite Feinmaterialtrennvorrichtung (50), wobei an einem zweiten Ende des Chassis (2) gegenüber dem ersten Ende ein zweites Entwässerungssieb (70) vorgesehen ist, um das Sandprodukt von der zweiten Feinmaterialtrennvorrichtung (50) zu empfangen und das Sandprodukt zu entwässern.

8. Vorrichtung nach Anspruch 7, wobei die ersten und zweiten Feinmaterialtrennvorrichtungen (20, 50) jeweils eine erste und eine zweite Hydrozykloneinheit umfassen.

9. Vorrichtung nach Anspruch 8, wobei die erste und/oder die zweite Hydrozykloneinheit (20, 50) mehrere Zyklone mit einem gemeinsamen Einlassverteiler und gemeinsamen Auslassverteilern umfasst.

10. Vorrichtung nach Anspruch 8 oder Anspruch 9, wobei die zweite Feinmaterialtrennvorrichtung ferner eine Klassierereinheit (60A, 60B) umfasst, die auf dem Chassis (2) angebracht ist, um Sand von der zweiten Hydrozykloneinheit (50) für eine weitere Trennung von feinen Verunreinigungen aus dem Sand zu empfangen.

11. Vorrichtung nach Anspruch 10, wobei die Klassierereinheit (60A, 60B) eine Gegenstromklassifizierungseinheit umfasst, die mindestens einen Behälter umfasst, in den der Sand stromabwärts der zweiten Hydrozykloneinheit eingeführt wird, wobei eine Aufwärtsströmung von Wasser in einen unteren Bereich des mindestens einen Behälters mit einer vorbestimmten Geschwindigkeit geleitet wird, um feine Partikel in einen Überlaufdamm des Behälters anzuheben, wobei sich das Sandprodukt absetzt und in einem unteren Bereich des Behälters gesammelt wird.

12. Vorrichtung nach einem der Ansprüche 7 bis 11, die ferner ein Sortiersieb (10) umfasst, das an einem ersten Ende des Chassis (2) angebracht ist, um überdimensioniertes Material aus dem Sand stromaufwärts der ersten Feinmaterialtrennvorrichtung (20) zu entfernen.

13. Vorrichtung nach Anspruch 12, wobei eine Pumpe zum Pumpen von Sand, der in einem Wasserstrom mitgenommen wird, aus einem Sumpf des Sortiersiebes (10) in die erste Feinmaterialtrennvorrichtung (20) vorgesehen ist.

14. Vorrichtung nach einem der Ansprüche 7 bis 13, wobei die Steuervorrichtung zum Steuern des Wassergehalts des Sandes stromaufwärts der Abriebwäschereinheit (40) bereitgestellt ist, so dass der Sand, der in die Abriebwäschereinheit eintritt, einen Wassergehalt von zwischen 20 % und 25 % aufweist.

15. Vorrichtung nach Anspruch 14, wobei die Steuervorrichtung den Wassergehalt des Sandes durch Überwachen des Drehmoments bestimmt, das an die Schaufeln (48) der Abriebwäschereinheit (40) angelegt wird, und den Wassergehalt des Sandes durch Zugabe von Wasser zu dem Sand steuert, um den Zielwassergehalt zu erreichen.

## Revendications

1. Processus de raffinage de sable destiné à être utilisé comme sable de fracturation comprenant les étapes consistant à passer le sable à travers un premier étage de séparation de fines (20) pour éliminer les fines particules de contaminants du sable, réduire la teneur en eau du sable à moins de 20 %, passer le sable dans une unité de lavage par attrition (40) contenant des pales mobiles (48) pour délaminer l'argile et autres contaminants des grains de sable, passer le sable de l'unité de lavage par attrition à travers un second étage de séparation de fines (50) pour séparer les contaminants fins du sable et déshydrater le produit de sable résultant dans un autre étage de déshydratation.

2. Processus selon l'une quelconque des revendications précédentes, comprenant en outre l'étape de régulation de la teneur en eau du sable en amont de l'unité de lavage par attrition (40) de telle sorte que le sable qui entre dans l'unité de lavage par attrition (40) ait une teneur en eau entre 20 % et 25 %.

3. Processus selon la revendication 2, dans lequel la teneur en eau du sable est régulée en déterminant la teneur en eau du sable et en ajoutant de l'eau au sable pour obtenir la teneur en eau requise.

4. Processus selon la revendication 3, dans lequel la teneur en eau du sable est déterminée en contrôlant la demande de couple de l'unité de lavage par attrition (40).

5. Processus selon l'une quelconque des revendications précédentes, dans lequel le sable est passé dans une unité de classification à contre-courant (60A, 60B) en amont du second étage de séparation de fines (50), dans lequel un flux montant d'eau sépare les particules mesurant moins de 200 µm du sable, le produit de sable se stabilisant au fond de l'unité de classification à contre-courant (60A, 60B), le sable étant retiré du fond de l'unité de classification à contre-courant avant d'être passé dans ledit autre étage de déshydratation (70).

6. Processus selon l'une quelconque des revendications précédentes, comprenant une première étape de calibrage du sable pour éliminer le matériau surdimensionné du sable sur un tamis vibrant (10) ayant un platine perforée en amont dudit premier étage de séparation de fines, l'étape de calibrage du sable éliminant le matériau ayant une grosseur de particule de plus de 2 mm.

7. Appareil de raffinage de sable destiné à être utilisé comme sable de fracturation comprenant un châssis allongé (2), un premier dispositif de séparation de fines (20) monté sur le châssis pour séparer le matériau fin du sable, un premier tamis de déshydratation (30) étant monté sur le châssis adjacent au premier dispositif de séparation de fines et en aval de celui-ci pour recevoir le sable en provenant, une unité de lavage par attrition (40) montée sur le châssis, adjacente au premier tamis de déshydratation et en aval de celui-ci, ladite unité de lavage par attrition recevant le sable provenant du premier tamis de déshydratation (30), ladite unité de lavage par attrition (40) comprenant une pluralité de pales mobiles (48) adaptées pour délaminer l'argile et autres contaminants des grains de sable lors du passage du sable à travers l'unité de lavage par attrition (40), un second dispositif de séparation de fines (50), un second tamis de déshydratation (70) étant fourni sur une seconde extrémité du châssis (2), opposée à ladite première extrémité, pour recevoir le produit de sable du second dispositif de séparation de fines (50) afin de déshydrater le produit de sable.

8. Appareil selon la revendication 7, dans lequel les premier et second dispositifs de séparation de fines (20, 50) comprennent respectivement des première et seconde unités d'hydro-cyclones.

9. Appareil selon la revendication 8, dans lequel les première et/ou seconde unités d'hydro-cyclones (20, 50) comprennent de multiples cyclones ayant un collecteur d'entrée commun et des collecteurs de sortie communs.

10. Appareil selon la revendication 8 ou la revendication 9, dans lequel le second dispositif de séparation de fines comprend en outre une unité de classification (60A, 60B) montée sur le châssis (2) pour recevoir le sable provenant de la seconde unité d'hydro-cyclone (50) en vue de séparer davantage les contaminants fins du sable.

11. Appareil selon la revendication 10, dans lequel l'unité de classification (60A, 60B) comprend une unité de classification à contre-courant comprenant au moins une cuve dans laquelle le sable est introduit en aval de la seconde unité d'hydro-cyclone, un flux montant d'eau étant passé dans une région inférieure de l'au moins une cuve à une vitesse prédéterminée pour faire remonter les particules fines dans un déversoir de la cuve, le produit de sable se stabilisant et étant collecté dans une région inférieure de la cuve.

12. Appareil selon l'une quelconque des revendications 7 à 11, comprenant en outre un tamis de calibrage (10) monté sur une première extrémité du châssis (2) pour éliminer le matériau surdimensionné du sable en amont du premier dispositif de séparation de fines (20).

13. Appareil selon la revendication 12, dans lequel une pompe est fournie pour pomper le sable, entraîné dans un flux d'eau, depuis une cuvette du tamis de calibrage (10) jusque dans le premier dispositif de séparation de fines (20).

14. Appareil selon l'une quelconque des revendications 7 à 13, dans lequel un dispositif de régulation est fourni pour réguler la teneur en eau du sable en amont de l'unité de lavage par attrition (40) de telle sorte que le sable entrant dans l'unité de lavage par attrition ait une teneur en eau entre 20 % et 25 %.

15. Apparaît selon la revendication 14, dans lequel le dispositif de régulation détermine la teneur en eau du sable en contrôlant le couple appliqué aux pales (48) de l'unité de lavage par attrition (40) et régule la teneur en eau du sable en ajoutant de l'eau au sable pour parvenir à la teneur en eau cible.
